# EUROPÄISCHE PATENTSCHRIFT

(11) **EP 1 036 704 B1**
(45) Veröffentlichungstag und Bekanntmachung des Hinweises auf die Patenterteilung: **04.10.2006**
(21) Anmeldenummer: 99113989.0
(22) Anmeldetag: 19.07.1999
(51) Int. Cl.: B60Q 1/14, B60R 16/00

(54) **Lenkstockschalter für Kraftfahrzeuge**
Steering column switch for vehicle
Interrupteur de colonne de direction pour véhicule

(30) Priorität: 18.03.1999 DE 19912087
(43) Veröffentlichungstag der Anmeldung: 20.09.2000
(73) Patentinhaber: Delphi Technologies Inc., Troy, MI 48007 (US)
(72) Erfinder: Leng, Peter, 65428 Rüsselsheim (DE); Junker, Paul, 55411 Bingen (DE)
(74) Vertreter: Becker, Bernd

(56) Entgegenhaltungen:
- EP-A- 0 094 999
- EP-A- 0 252 800
- US-A- 5 708 242

## Beschreibung

Die Erfindung bezieht sich auf einen Lenkstockschalter für Kraftfahrzeuge mit mindestens einem in einen Schalthebel integrierten Wischer-/Wascherschalter, dessen an einem Drehschaltglied festgelegte Kontaktbrücke mit mehreren Kontaktarmen Schaltkontaktbahnen mit zugehörigen Anschlußkontakten beaufschlagt.

Bekannte Lenkstockschalter dieser Art umfassen mindestens einen Schalter für die Front-Wischfunktionen, der meist rotationssymmetrisch auf einer Längsachse eines Schalthebels des Lenkstockschalters angeordnet ist, und der in den unterschiedlichen Schaltstellungen jeweils verrastet. An dem freien Ende des Schalthebels ist ein Drucktastenschalter für eine Front-Waschfunktion angeordnet. Häufig ist auf dem Schalthebel dem Schalter für die Front-Wischfunktionen ein weiterer Schalter für die Heck-Wisch-/Waschfunktionen zugeordnet. Sowohl der Schalter für die Front-Wischfunktionen als auch der Schalter für die Heck-Wisch-/Waschfunktionen weist jeweils eine der Anzahl seiner Schaltstellungen entsprechende Anzahl von Kontaktbrücken auf, die zugehörige Schaltkontaktbahnen beaufschlagen. Die Kontaktbrücken sowie die zugeordneten Schaltkontaktbahnen verlaufen kreissegmentförmig zum Umfang des Drehschaltgliedes des jeweiligen Schalters an einer Stirnseite des Drehschaltgliedes. Aufgrund des relativ großen Platzbedarfs der Kontaktbrücken ist die Anzahl der Schaltstellungen jedes Schalters begrenzt. Zur Betätigung der Front-Waschfunktion wird der zugeordnete Drucktastenschalter betätigt, der über einen entsprechenden, mit einer Kontaktbrücke versehenen Betätigungsstößel ebenfalls auf zugeordnete Schaltkontaktbahnen wirkt. Die Verbindung der Schaltkontaktbahnen zu dem Bordnetz des Kraftfahrzeuges erfolgt mittels Anschlußleitungen, die an Anschlußkontakten befestigt sind, und die durch die Längsachse des Lenkstockschalters geführt sind. Die Anzahl der Anschlußleitungen entspricht hierbei mindestens der Anzahl der Schaltkontaktbahnen. Die Summe der Schaltstellungen und somit der Schaltsignale, insbesondere des Schalters für die Front-Wischfunktionen, ist aufgrund des Platzbedarfs der zugeordneten Schaltkontaktbahnen und deren Anschlußleitungen stark begrenzt.

Ferner ist ein Gray-Code als eine besondere Darstellungsform des Binärcodes bekannt. Seine Grundlage besteht darin, daß sich zwei benachbarte Gray-Zahlen in nicht mehr als einem Bit unterscheiden. Da der Unterschied benachbarter Zeichen nur eine Stelle betragen darf, besteht die Möglichkeit, Fehler bei der Übertragung von Informationen zuverlässig zu erkennen.

Es ist Aufgabe der Erfindung, einen Lenkstockschalter der eingangs genannten Art zu schaffen, dessen Wischer-/Wascherschalter eine große Anzahl von Schaltstellungen bei gleichzeitig geringem Platzbedarf sowie hoher Schaltsicherheit bereitstellt, und der mit einer gegenüber den Schaltstellungen reduzierten Anzahl von Anschlußkontakten ausgestattet ist.

Erfindungsgemäß wird die Aufgabe dadurch gelöst, daß die Kontaktbrücke und die Schaltkontaktbahnen zur Übertragung der Schaltfunktionen im Gray-Code zusammenwirken.

Dieses Gray-codierte, also binär-codierte Zusammenspiel bewirkt eine gegenüber der Anzahl der Schaltstellungen des Wischer-/Wascherschalters reduzierte Anzahl der Schaltkontaktbahnen sowie der Kontaktarme der Kontaktbrücke, woraus ein geringer Platzbedarf innerhalb des Wischer-/Wascherschalters und somit eine kompakte Bauweise des Schalthebels bei einer Vielzahl von Schaltstellungen resultiert. Mit der reduzierten Anzahl der Schaltkontaktbahnen ist auch eine Verringerung der Anzahl der Anschlußkontakte und damit eine reduzierte Anzahl von Verbindungsleitungen zur Verbindung der Schaltkontaktbahnen mit dem Bordnetz des Kraftfahrzeuges gegeben. Die hohe Schaltsicherheit ist durch die Art der Codierung gewährleistet, da sich zwei benachbarte, Gray-codierte Schaltstellungen in nicht mehr als einem Bit unterscheiden dürfen, was einfach feststellbar ist. Somit ist bei einem Schaltvorgang die nachfolgende Schaltstellung eindeutig zu identifizieren.

Nach einer vorteilhaften Weiterbildung des Erfindungsgedankens, sind ein Front-Wischer-/Wascherschalter und ein Heck-Wischer-/Wascherschalter vorgesehen. Sonach sind die unterschiedlichen Schaltfunktionen räumlich getrennt dem Schalthebel des Lenkstockschalter zugeordnet und lassen sich nach Bedarf montieren.

Um die Kontaktbrücken der beiden Schalter mit möglichst geringen Fertigungskosten herstellen zu können, sind die Kontaktbrücken des Front- und des Heck-Wischer-/Wascherschalters jeweils als Stanzgitter mit federnden Kontaktarmen ausgebildet. Bevorzugt weist der der Front-Waschfunktion zugeordnete Kontaktarm der Kontaktbrücke des Front-Wischer /Wascherschalters in eine den Kontaktarmen für die Front-Wischfunktionen entgegengesetzte Richtung. Dies erlaubt eine zuverlässige Beaufschlagung des der Front-Waschfunktion zugeordneten Kontaktarms.

Zweckmäßigerweise sind die Schaltkontaktbahnen des Front-und des Heck-Wischer-/Wascherschalters jeweils als Stanzgitter ausgebildet. Somit ist eine zuverlässigen Kontaktierung der jeweils einem Stanzgitter zugeordneten Kontaktbrücke mit einem kostengünstigen Herstellungsverfahren geschaffen.

Um einen geringen Montageaufwand bei der Verdrahtung des Lenkstockschalters zu erzielen, sind vorteilhafterweise die Schaltkontaktbahnen zur Kontaktierung von Anschlußleitungen mit Klemmschneidverbindungen versehen.

Weiterhin sind zweckmäßigerweise die Schaltkontaktbahnen des Front-Wischer-/Wascherschalters in einen zwischen den beiden Drehgriffen des Front-und des Heck-Wischer-/Wascherschalters drehfest angeordneten Zwischenring eingesetzt. Da der Zwischenring in der Regel aus Kunststoff gefertigt ist, erfolgt das Einlassen der Schaltkontaktbahnen im Spritzgußverfahren durch Umspritzen.

Nach einer weiteren Ausgestaltung der Erfindung ist an dem Zwischenring eine konzentrische Achse zur Halterung des Front- und des Heck-Wischer-/Wascherschalters angeformt, wobei die Achse zum einen in dem Drehgriff des Front-Wischer-/Wascherschalters und zum anderen in einem Fuß des Schalthebels festgelegt ist. Aufgrund dieser Maßnahme sind die beiden Wischer-/Wascherschalter zueinander zentriert und zusätzliche Befestigungsbauteile können weitgehend entfallen.

Bevorzugt sind die Schaltkontaktbahnen des Heck-Wischer-/Wascherschalters auf einem zwischen den Fuß des Schalthebels und dem Drehgriff des Heck-Wischer-/Wascherschalters vorgesehenen Träger befestigt. Hierdurch ist eine hinreichende Stabilität der Schaltkontaktbahnen gegen eine unbeabsichtigte Beschädigung gegeben. Bevorzugt ist der Träger auf der Achse des Zwischenringes drehfest angeordnet.

Nach einer vorteilhaften Weiterbildung der Erfindung ist der Kontaktarm der Kontaktbrücke des Drehschaltgliedes des Front-Wischer-/Wascherschalters über einen an einem stirnseitig in den Schalthebel eingesetzten Taster angeordneten Betätigungsstößel zur Realisierung der Front-Waschfunktion beaufschlagbar. Eine separate Kontaktbrücke ist zur Bereitstellung dieser Schaltfunktion somit nicht erforderlich.

Um eine sichere Positionierung in der gewünschten Schaltposition zu gewährleisten, weist das Drehschaltglied des Front-Wischer-/Wascherschalters eine stirnseitige Rastung auf, die mit einer dem Zwischenring zugeordneten, federbelasteten Rasthülse zusammenwirkt. Weiterhin weist das Drehschaltglied des Heck-Wischer-/Wascherschalters eine umfangsseitige Rastung auf, die mit einer dem Träger zugeordneten, federbelasteten Rasthülse zusammenwirkt. Die Rastungen sind platzsparend symmetrisch zur Längsachse des Lenkstockschalters angeordnet.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung-zu verlassen.

Die Erfindung wird im folgenden anhand eines Ausführungsbeispieles unter Bezugnahme auf die zugehörigen Zeichnungen näher erläutert. Es zeigen:

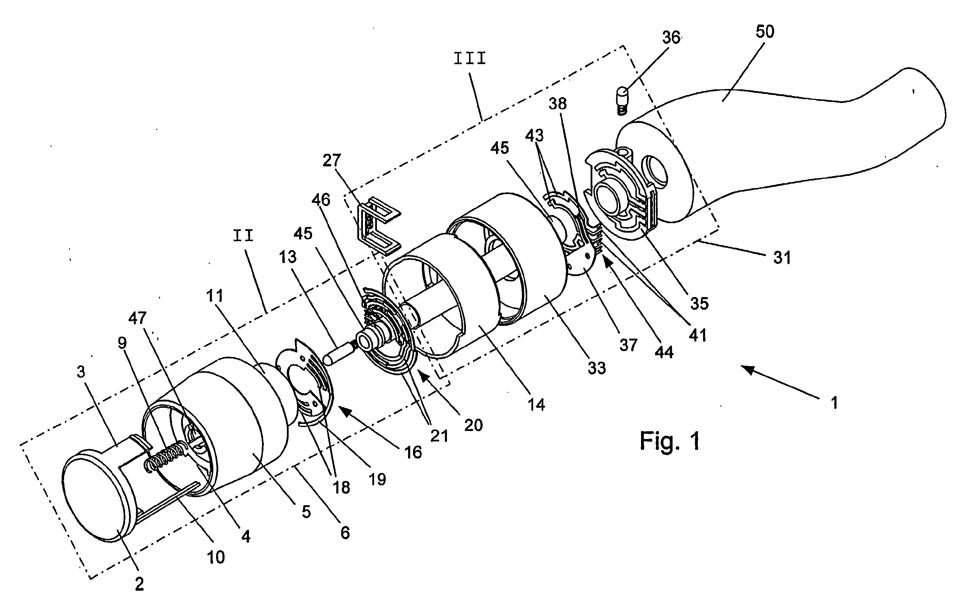

- Fig.1: eine Explosionsdarstellung eines erfindungsgemäßen Lenkstockschalters,

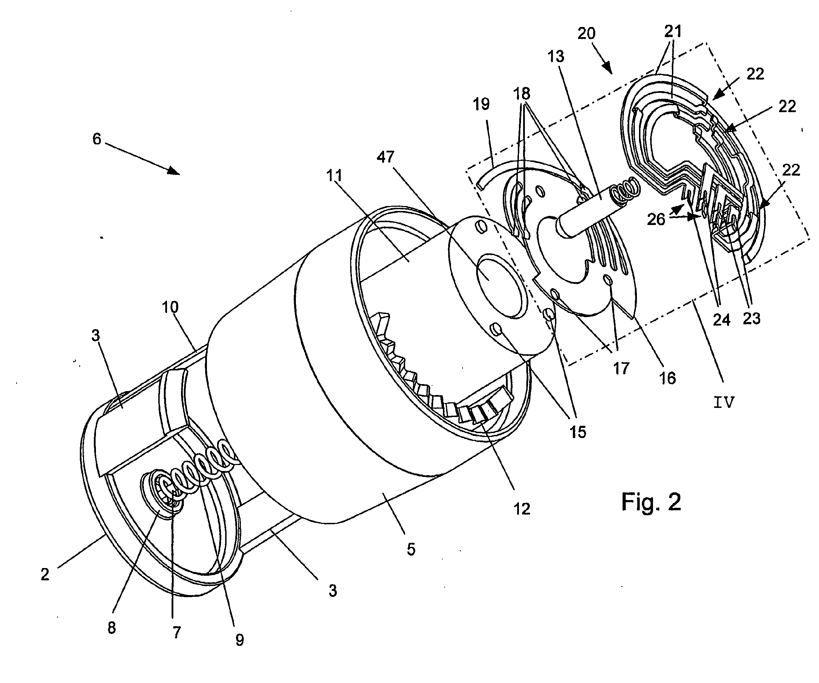

- Fig.2: eine gedrehte Darstellung der Einzelheit II nach Fig. 1,

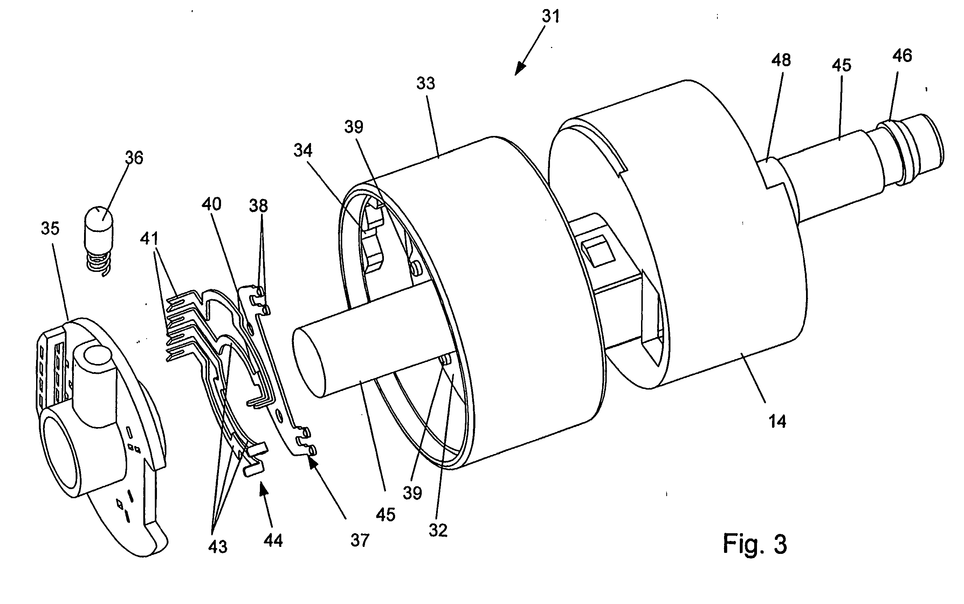

- Fig.3: eine gedrehte Darstellung der Einzelheit III nach Fig. 1 und

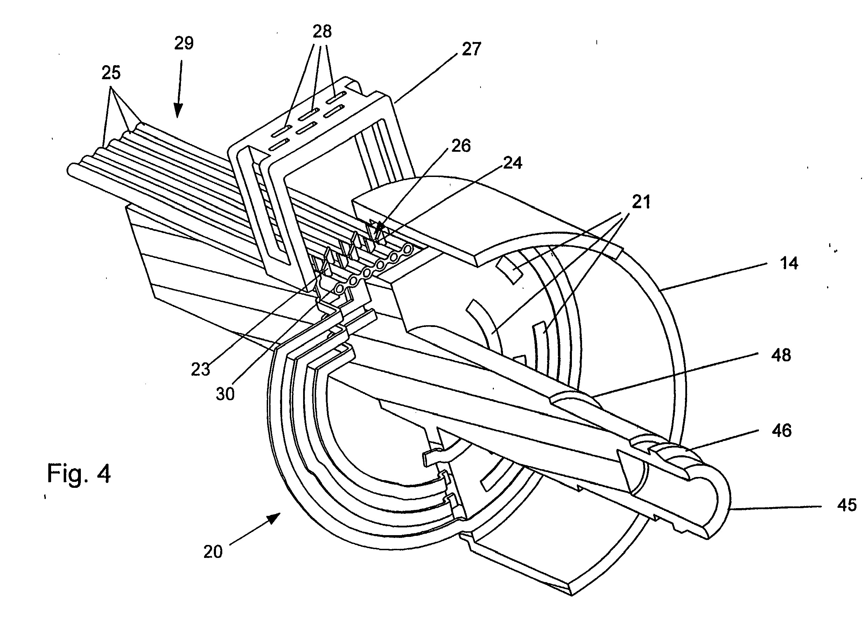

- Fig.4: eine Darstellung der Einzelheit IV nach Fig. 2 im teilweise montierten Zustand.

In einen Schalthebel 1 des Lenkstockschalters ist stirnseitig ein Taster 2 für eine Front-Waschfunktion eingesetzt, der mittels zwei gegenüberliegender Klipsarme 3 beweglich in korrespondierende Aussparungen 4 eines Drehgriffes 5 eines Front-Wischer-/Wascherschalters 6 eingesetzt ist. Auf der dem Drehgriff 5 zugeordneten Seite ist der Taster 2 mit einem konzentrischen Zapfen 7 sowie einem kreisringförmigen Wulst 8 zur Fixierung einer Druckfeder 9 versehen, deren eine Stirnseite an dem Taster 2 und deren andere Stirnseite an dem Drehgriff 5 anliegt. Die Druckfeder 9 stellt die Rückstellbewegung des Tasters 2 nach dessen Betätigung sicher. Im weiteren ist auf dem äußeren Umfang des Tasters 2 ein Betätigungsstößel 10 angeordnet, der ein Drehschaltglied 11 des Front-Wischer-/Wascherschalters 6 durchragt.

Der Front-Wischer-/Wascherschalter 6 umfaßt im wesentlichen den Drehgriff 5, in dem ein topfförmiges Drehschaltglied 11 gehaltert ist. Zwischen dem Drehgriff 5 und dem Drehschaltglied 11 ist stirnseitig auf dem Drehschaltglied 11 eine kreissegmentförmige Rastung 12 ausgebildet, die mit einer federbelasteten Rasthülse 13 zusammenwirkt, wobei die Rasthülse 13 einem Zwischenring 14 des Schalthebels 1 zugeordnet ist. Das Zusammenwirken der Rastung 12 mit der Rasthülse 13 bewirkt ein sicheres Fixieren des Front-Wischer-/Wascherschalters 6 in der gewünschten Schaltstellung. Das Drehschaltglied 11 ist auf seiner dem Zwischenring 14 zugewandten Stirnseite mit gleichmäßig über den Umfang verteilten Zapfen 15 zur Festlegung einer dem Drehschaltglied 11 zugeordneten Kontaktbrücke 16 für die Front-Wisch-/Waschfunktionen versehen.

Die als Stanzgitter ausbildete Kontaktbrücke 16 weist Öffnungen 17 zur Aufnahme der Zapfen 15 des Drehschaltgliedes 11 auf. Ferner sind kreissegmentförmig zum Umfang der Kontaktbrücke 16 federnde Kontaktarme 18 für die Front-Wischfunktionen sowie ein federnder Kontaktarm 19 für die Front-Waschfunktion ausgebildet, wobei die freien Enden der Kontaktarme 18 in die Richtung des Zwischenrings 14 und das freie Ende des Kontaktarmes 19 in die Richtung des Betätigungsstößels 10 des Tasters 2 weisen. Die freien Enden der Kontaktarme 18 sind derart angeordnet, daß sie zur Übertragung der Front-Wischfunktionen mit als Stanzgitter 20 ausgebildeten Schaltkontaktbahnen 21 zusammenwirken, die entsprechende Abwinklungen 22 aufweisen, welche im Gray-Code mit den freien Enden der Kontaktarme 18 zusammenwirken. Die Front-Waschfunktion wird durch die Druckbeaufschlagung des Tasters 2 bewirkt, wobei der Betätigungsstößel 10 den Kontaktarm 19 in Richtung der zugeordneten Schaltkontaktbahn 21 des Stanzgitters 20 bewegt.

Um eine hinreichende Stabilität des Stanzgitters 20 zu erzielen, ist dieses in den Zwischenring 14 eingesetzt. Hierbei ragen selbstverständlich die von den Kontaktarmen 18, 19 der zugeordneten Kontaktbrücke 16 beaufschlagten Bereiche der Schaltkontaktbahnen 21 ins Freie. Zur Verbindung des Stanzgitters 20 mit einem Bordnetz eines Kraftfahrzeuges ist jede der Schaltkontaktbahnen 21 mit einem Anschlußkontakt 23 versehen. Die Anschlußkontakte 23 weisen an ihren freien Enden eine Nut 24 auf, deren Breite dem Durchmesser der Anschlußleitung 25 entspricht und die in einer sich öffnenden V-förmigen Ausnehmung 26 mündet. Beim Aufsetzen eines Bügels 27, der mit den Anschlußkontakten 23 korrespondierende Öffnungen 28 aufweist, werden die als Flachbandkabel 29 ausgeführten Anschlußleitungen 25, die im Bereich der zugeordneten Anschlußkontakte 23 plaziert sind, in die entsprechende Nut 24 gepreßt, wobei die Isolation 30 des Flachbandkabels 29 eingeschnitten und der Kontakt hergestellt wird.

Auf der dem Stanzgitter 20 abgewandten Seite des Zwischenringes 14 befindet sich ein Heck-Wischer-/Wascherschalter 31 mit einem Drehschaltglied 32, das in einem Drehgriff 33 angeordnet ist und eine umfangsseitige Rastung 34 trägt. Die Rastung 34 wirkt zur Fixierung der erwünschten Schaltposition des Heck-Wischer-/Wascherschalters 31 mit einer umfangsseitig in einen Träger 35 eingesetzten, federbelasteten Rasthülse 36 zusammen. Dem Drehschaltglied 32 ist auf der dem Träger 35 zugewandten Stirnseite eine als Stanzgitter ausgebildete Kontaktbrücke 37 mit Kontaktarmen 38 drehfest zugeordnet. Die Befestigung der Kontaktbrücke 37 erfolgt mittels am Drehschaltglied 32 angeformter Zapfen 39, die in korrespondierende Bohrungen 40 der Kontaktbrücke 37 eingreifen. Zum Anschluß an das Bordnetz ist die Kontaktbrücke 37 mit Anschlußkontakten 41 versehen, die wie die Anschlußkontakte 23 ausgeformt sind und mit Öffnungen 42 des Trägers 35 eine Klemmschneidverbindung eingehen.

Die Kontaktbrücke 37 wirkt zur Übertragung der Heck-Wisch-/Waschfunktionen mit Schaltkontaktbahnen 43 eines auf dem Träger 37 befestigten Stanzgitters 44 zusammen, wobei die Übertragung der Heck-Wisch-/Waschfunktionen wiederum im Gray-Code erfolgt.

Zur Montage der einzelnen Komponenten des Schalthebels 1, weist der Zwischenring 14 eine abgesetzte Achse 45 auf, die beidseitig die Stirnseiten des Zwischenringes 14 überragt. Die dem Front-Wischer-/Wascherschalter 6 zugewandte Seite der Achse 45 ist mit einem ringförmigen Ansatz 46 versehen, der eine entsprechende axiale Ausnehmung 47 des Drehgriffes 5 hintergreift und den Front-Wischer-/Wascherschalter 6 somit drehbeweglich haltert. Der große Durchmesser 48 der Achse 45 ist in einer Bohrung 49 in der Stirnseite des Drehschaltgliedes 11 geführt. Der dem großen Durchmesser 48 gegenüberliegende Teil der Achse 45 zentriert den Heck-Wischer-/Wascherschalter 31 sowie den drehfest angeordneten Träger 35 und ist in einem Fuß 50 des Schalthebels 1 festgelegt.

### Bezugszeichenliste

- 1.: Schalthebel
- 2.: Taster
- 3.: Klipsarm
- 4.: Aussparungen
- 5.: Drehgriff
- 6.: Front-Wischer-/ Wascherschalter
- 7.: Zapfen
- 8.: Wulst
- 9.: Druckfeder
- 10.: Betätigungsstößel
- 11.: Drehschaltglied
- 12.: Rastung
- 13.: Rasthülse
- 14.: Zwischenring
- 15.: Zapfen
- 16.: Kontaktbrücke
- 17.: Öffnungen
- 18.: Kontaktarme
- 19.: Kontaktarm
- 20.: Stanzgitter
- 21.: Schaltkontaktbahnen
- 22.: Abwinklungen
- 23.: Anschlußkontakt
- 24.: Nut
- 25.: Anschlußleitung
- 26.: Ausnehmung
- 27.: Bügel
- 28.: Öffnung
- 29.: Flachbandkabel
- 30.: Isolation
- 31.: Heck-Wischer-/ Wascherschalter
- 32.: Drehschaltglied
- 33.: Drehgriff
- 34.: Rastung
- 35.: Träger
- 36.: Rasthülse
- 37.: Kontaktbrücke
- 38.: Kontaktarm
- 39.: Zapfen
- 40.: Bohrungen
- 41.: Anschlußkontakt
- 42.: Öffnung
- 43.: Schaltkontaktbahn
- 44.: Stanzgitter
- 45.: Achse
- 46.: Ansatz
- 47.: Ausnehmung
- 48.: Durchmesser
- 49.: Bohrung
- 50.: Fuß

## Patentansprüche

1. Lenkstockschalter für Kraftfahrzeuge mit mindestens einem in einen Schalthebel (1) integrierten Wischer-/Wascherschalter (6 bzw. 31), dessen an einem Drehschaltglied (11 bzw. 32) festgelegte Kontaktbrücke (16 bzw. 37) mit mehreren Kontaktarmen (18) Schaltkontaktbahnen (21 bzw. 43) mit zugehörigen Anschlußkontakten (23 bzw. 41) beaufschlagt, **dadurch gekennzeichnet, daß** die Kontaktbrücke (16 bzw. 37) und die Schaltkontaktbahnen (21 bzw. 41) zur Übertragung der Schaltfunktionen im Gray-Code zusammenwirken.

2. Lenkstockschalter nach Anspruch 1, **dadurch gekennzeichnet, daß** ein Front-Wischer-/Wascherschalter (6) und ein Heck-Wischer-/Wascherschalter (31) vorgesehen sind.

3. Lenkstockschalter nach den Ansprüchen 1 und 2, **dadurch gekennzeichnet, daß** die Kontaktbrücken (16, 37) des Front- (6) und des Heck-Wischer-/Wascherschalters (31) jeweils als Stanzgitter mit federnden Kontaktarmen (18, 19 bzw. 38) ausgebildet sind.

4. Lenkstockschalter nach Anspruch 3, **dadurch gekennzeichnet, daß** der der Front-Waschfunktion zugeordnete Kontaktarm (19) der Kontaktbrücke (16) des Front-Wischer-/Wascherschalters (6) in eine den Kontaktarmen (18) für die Front-Wischfunktionen entgegengesetzte Richtung weist.

5. Lenkstockschalter nach einem der Ansprüche 1 bis 4, **dadurch gekennzeichnet, daß** die Schaltkontaktbahnen (21 bzw. 43) des Front- (6) und des Heck-Wischer-/Wascherschalters (31) jeweils als Stanzgitter (20 bzw. 44) ausgebildet sind.

6. Lenkstockschalter nach einem der Ansprüche 1 bis 5, **dadurch gekennzeichnet, daß** die Schaltkontaktbahnen (21 bzw. 43) zur Kontaktierung von Anschlußleitungen (25) mit Klemmschneidverbindungen versehen sind.

7. Lenkstockschalter nach einem der Ansprüche 1 bis 6, **dadurch gekennzeichnet, daß** die Schaltkontaktbahnen (21) des Front-Wischer-/Wascherschalters (6) in einen zwischen den beiden Drehgriffen (5, 33) des Front- (6) und des Heck-Wischer-/Wascherschalters (31) drehfest angeordneten Zwischenring (14) eingesetzt sind.

8. Lenkstockschalter nach Anspruch 7, **dadurch gekennzeichnet, daß** an dem Zwischenring (14) eine konzentrische Achse (45) zur Halterung des Front-(6) und des Heck-Wischer-/Wascherschalters (31) angeformt ist, wobei die Achse (45) zum einen in dem Drehgriff (5) des Front-Wischer-/Wascherschalters (6) und zum anderen in einem Fuß (50) des Schalthebels (1) festgelegt ist.

9. Lenkstockschalter nach einem der Ansprüche 1 bis 8, **dadurch gekennzeichnet, daß** die Schaltkontaktbahnen (43) des Heck-Wischer-/Wascherschalters (31) auf einem zwischen den Fuß (50) des Schalthebels (1) und dem Drehgriff (33) des Heck-Wischer-/Wascherschalters (31) vorgesehenen Träger (35) befestigt sind.

10. Lenkstockschalter nach Anspruch 9, **dadurch gekennzeichnet, daß** der Träger (35) auf der Achse (45) des Zwischenringes (14) drehfest angeordnet ist.

11. Lenkstockschalter nach einem der Ansprüche 1 bis 11, **dadurch gekennzeichnet, daß** der Kontaktarm (19) der Kontaktbrücke (16) des Drehschaltgliedes (11) des Front-Wischer-/Wascherschalters (6) über einen an einem stirnseitig in den Schalthebel (1) eingesetzten Taster (2) angeordneten Betätigungsstößel (10) zur Realisierung der Front-Waschfunktion beaufschlagbar ist.

12. Lenkstockschalter nach einem der Ansprüche 1 bis 11, **dadurch gekennzeichnet, daß** das Drehschaltglied (11) des Front-Wischer-/Wascherschalters (6) eine stirnseitige Rastung (12) aufweist, die mit einer dem Zwischenring (14) zugeordneten, federbelasteten Rasthülse (13) zusammenwirkt.

13. Lenkstockschalter nach einem der Ansprüche 1 bis 12, **dadurch gekennzeichnet, daß** das Drehschaltglied (32) des Heck-Wischer-/Wascherschalters (31) eine umfangsseitige Rastung (34) aufweist, die mit einer dem Träger (35) zugeordneten, federbelasteten Rasthülse (36) zusammenwirkt.

## Claims

1. Steering column switch for motor vehicles having at least one wiper/washer switch (6 or 31) integrated in a switch lever (1), the contact bridge (16 or 3 7), having several contact arms (18), fixed on a rotary switch member (11 or 32) of the wiper/washer switch (6 or 31) acting on switch contact paths (21 or 43) with associated connection contacts (23 or 41), **characterised in that** the contact bridge (16 or 37) and the switch contact paths (21 or 41) cooperate to transfer the switch functions in Gray code.

2. Steering column switch according to claim 1, **characterised in that** a front wiper/washer switch (6) and a rear wiper/washer switch (31) are provided.

3. Steering column switch according to claims 1 and 2, **characterised in that** the contact bridges (16, 37) of the front (6) and of the rear wiper/washer switch (31) are formed in each case as stamped grids with resilient contact arms (18, 19 or 38).

4. Steering column switch according to claim 3, **characterised in that** the contact arm (19), assigned to the front washing function, of the contact bridge (16) of the front wiper/washer switch (6) points in a direction opposite to the contact arms (18) for the front wiping functions.

5. Steering column switch according to one of claims 1 to 4, **characterised in that** the switch contact paths (21 or 43) of the front (6) and of the rear wiper/washer switch (31) are formed in each case as stamped grids (20 or 44).

6. Steering column switch according to one of claims 1 to 5, **characterised in that** the switch contact paths (21 or 43) are provided to contact connection lines (25) with insulation piercing connections.

7. Steering column switch according to one of claims 1 to 6, **characterised in that** the switch contact paths (21) of the front wiper/washer switch (6) are inserted in an intermediate ring (14) arranged to be resistant to rotation between the two rotary handles (5, 33) of the front (6) and of the rear wiper/washer switch (31).

8. Steering column switch according to claim 7, **characterised in that** a concentric axis (45) to mount the front (6) and the rear wiper/washer switch (31) is moulded onto the intermediate ring (14), wherein the axis (45) is fixed firstly in the rotary handle (5) of the front wiper/washer switch (6) and secondly in a base (50) of the switch lever (1).

9. Steering column switch according to one of claims 1 to 8, **characterised in that** the switch contact paths (43) of the rear wiper/washer switch (31) are attached to a support (35) provided between the base (50) of the switch lever (1) and the rotary handle (33) of the rear wiper/washer switch (31).

10. Steering column switch according to claim 9, **characterised in that** the support (35) is arranged to be resistant to rotation on the axis (45) of the intermediate ring (14).

11. Steering column switch according to one of claims 1 to 11, **characterised in that** the contact arm (19) of the contact bridge (16) of the rotary switch member (11) of the front wiper/washer switch (6) can be acted upon via an actuating ram (10) arranged on a push button (2) inserted in the switch lever (1) on the end-face side, to realise the front washing function.

12. Steering column switch according to one of claims 1 to 11, **characterised in that** the rotary switch member (11) of the front wiper/washer switch (6) has an end-face side catch (12), which cooperates with a spring-loaded catch sleeve (13) assigned to the intermediate ring (14).

13. Steering column switch according to one of claims 1 to 12, **characterised in that** the rotary switch member (32) of the rear wiper/washer switch (31) has a peripheral-side catch (34), which cooperates with a spring-loaded catch sleeve (36) assigned to the support (35).

## Revendications

1. Commutateur de colonne de direction pour véhicule automobile avec au moins un commutateur essuie-glace/lave-glace (respectivement 6 et 31) intégré dans un levier de commande (1), dont le pont de contact (respectivement 16 et 37) fixé sur un organe de commutation tournant (respectivement 11 et 32), agit par plusieurs bras de contact (18) sur des pistes de contact de commutation (respectivement 20 et 43) avec contacts de connexion (respectivement 23 et 41) correspondants, **caractérisé en ce que** le pont de contact (respectivement 16 et 37) et les pistes de contact de commutation (respectivement 20 et 41) coopèrent pour la transmission des fonctions de commutation dans le code Gray.

2. Commutateur de colonne de direction selon la revendication 1, **caractérisé en ce que** sont prévus un essuie-glace/lave-glace avant (6) et un essuie-glace/lave-glace arrière (31).

3. Commutateur de colonne de direction selon les revendications 1 et 2, **caractérisé en ce que** les ponts de contact (16, 37) du commutateur essuie-glace/lave-glace avant (6) et du commutateur essuie-glace/lave-glace arrière (31) sont réalisés chacun sous la forme de grilles découpées avec bras de contact (respectivement 18, 19 et 38) élastiques.

4. Commutateur de colonne de direction selon la revendication 3, **caractérisé en ce que** le bras de contact (19), associé à la fonction de lavage avant, du pont de contact (16) du commutateur essuie-glace/lave-glace avant (6) est dirigé dans un sens opposé aux bras de contact (18) pour les fonctions d'essuyage avant.

5. Commutateur de colonne de direction selon l'une des revendications 1 à 4, **caractérisé en ce que** les pistes de contact de commutation (respectivement 21 et 43) du commutateur essuie-glace/lave-glace avant (6) et du commutateur essuie-glace/lave-glace arrière (31) sont réalisées chacune sous la forme de grilles découpées (respectivement 20 et 44).

6. Commutateur de colonne de direction selon l'une des revendications 1 à 5, **caractérisé en ce que** les pistes de contact de commutation (respectivement 21 et 43) sont pourvues de connexions coupantes de serrage pour la mise en contact de lignes de raccordement (25).

7. Commutateur de colonne de direction selon l'une des revendications 1 à 6, **caractérisé en ce que** les pistes de contact de commutation (21) du commutateur essuie-glace/lave-glace avant (6) sont insérées dans une bague intermédiaire (14) disposée solidairement en rotation entre les deux poignées tournantes (5, 33) du commutateur essuie-glace/lave-glace avant (6) et du commutateur essuie-glace/lave-glace arrière (31).

8. Commutateur de colonne de direction selon la revendication 7, **caractérisé en ce que** sur la bague intermédiaire (14) est formé un axe (45) concentrique pour la fixation du commutateur essuie-glace/lave-glace avant (6) et du commutateur essuie-glace/lave-glace arrière (31), l'axe (45) étant fixé d'une part dans la poignée tournante (5) du commutateur essuie-glace/lave-glace avant (6) et d'autre part dans un pied (50) du levier de commande (1).

9. Commutateur de colonne de direction selon l'une des revendications 1 à 8, **caractérisé en ce que** les pistes de contact de commutation (43) du commutateur essuie-glace/lave-glace arrière (31) sont fixées sur un support (35) prévu entre le pied (50) du levier de commande (1) et la poignée tournante (33) du commutateur essuie-glace/lave-glace arrière (31).

10. Commutateur de colonne de direction selon la revendication 9, **caractérisé en ce que** le support (35) est disposé solidairement en rotation sur l'axe (45) de la bague intermédiaire (14).

11. Commutateur de colonne de direction selon l'une des revendications 1 à 11, **caractérisé en ce que** le bras de contact (19) du pont de contact (16) de l'organe de commutation tournant (11) du commutateur essuie-glace/lave-glace avant (6) peut être sollicité par un poussoir d'actionnement (10) disposé sur une touche (2) insérée frontalement dans le levier de commande (1), pour réaliser la fonction de lavage avant.

12. Commutateur de colonne de direction selon l'une des revendications 1 à 11, **caractérisé en ce que** l'organe de commutation tournant (11) du commutateur essuie-glace/lave-glace avant (6) présente un crantage frontale (12) qui coopère avec une douille d'encliquetage (14) soumise à l'action d'un ressort (13).

13. Commutateur de colonne de direction selon l'une des revendications 1 à 12, **caractérisé en ce que** l'organe de commutation tournant (32) du commutateur essuie-glace/lave-glace arrière (31) présente un crantage périphérique (34) qui coopère avec un support (35) soumis à l'action d'un ressort (13).
